# EUROPÄISCHE PATENTSCHRIFT

(11) **EP 3 334 647 B1**
(45) Veröffentlichungstag und Bekanntmachung des Hinweises auf die Patenterteilung: **11.09.2019**
(21) Anmeldenummer: 16731128.1
(22) Anmeldetag: 21.06.2016
(51) Int. Cl.: B62M 1/10, B62D 37/06, B62J 27/00, G01C 19/02

(54) **STABILISIERUNGSEINRICHTUNG FÜR EIN ZWEIRAD**
STABILIZATION DEVICE FOR A TWO-WHEELED VEHICLE
DISPOSITIF DE STABILISATION POUR DEUX-ROUES

(30) Priorität: 14.08.2015 DE 102015215524
(43) Veröffentlichungstag der Anmeldung: 20.06.2018
(73) Patentinhaber: Robert Bosch GmbH, 70442 Stuttgart (DE)
(72) Erfinder: HENZLER, Markus, 70197 Stuttgart (DE); KLEWS, Matthias, 72076 Tuebingen (DE)
(86) Internationale Anmeldenummer: PCT/EP2016/064254
(87) Internationale Veröffentlichungsnummer: WO 2017/028999

(56) Entgegenhaltungen:
- WO-A1-2013/130656
- US-A1- 2011 163 516

## Beschreibung

Die Erfindung bezieht sich auf eine Stabilisierungseinrichtung für ein Zweirad nach dem Oberbegriff des Anspruches 1.

### Stand der Technik

In der DE 10 2013 200 020 A1 wird eine Stabilisierungseinrichtung für ein motorisiertes Zweirad beschrieben, die zwei nebeneinander angeordnete Kreisel mit paralleler Drehachse aufweist, wobei die Kreisel für die Stabilisierungsfunktion in einer gekoppelten Bewegung gekippt werden können. Die beiden Kreisel werden in entgegengesetzte Drehrichtungen permanent von Elektromotoren angetrieben und sind in nicht-kritischen Fahrzuständen mit ihren Drehachsen parallel zur Fahrzeuglängsachse ausgerichtet. Gerät das Zweirad in einen kritischen Fahrzustand, so werden beide Kreisel gegenläufig gekippt, wodurch sich in den Kreiseln ein stabilisierender Drehimpuls aufbaut. Nach der Stabilisierung der Fahrsituation werden die Kreiseldrehachsen wieder in ihre Ausgangsposition zurückgeschwenkt, um sicherzustellen, dass bei regulärer Fahrt kein resultierender Drehimpuls auf das Zweirad wirkt.

Dokument US2001/0163516A1, welches als der nächste Stand der Technik betrachtet wird, offenbart eine Stabilisierungseinrichtung für ein Zweirad, mit einem drehbar gelagerten Kreisel und einer Antriebseinheit zum Antreiben des Kreisels, wobei die Drehrichtung des Kreisels einstellbar ist.

### Offenbarung der Erfindung

Die erfindungsgemäße Stabilisierungseinrichtung kann in Zweirädern, insbesondere in motorisierten Zweirädern eingesetzt werden, um insbesondere in fahrkritischen Situationen eine Stabilisierung des Zweirades zu erreichen. Die Stabilisierungseinrichtung umfasst einen drehbar gelagerten Kreisel, durch dessen Rotationsbewegung ein Drehimpuls erzeugt wird, der stabilisierend auf das Fahrzeug wirkt. Es können instabile oder instabil werdende Fahrsituationen mithilfe der erfindungsgemäßen Stabilisierungseinrichtung stabilisiert werden, so dass die Gefahr eines Sturzes, insbesondere bei Kurvenfahrt des Zweirades, signifikant reduziert ist.

Die Stabilisierungseinrichtung umfasst des Weiteren eine Antriebseinheit, mit der der Kreisel um seine Drehachse angetrieben werden kann, sowie eine zwischen der Antriebseinheit und dem Kreisel angeordnete Drehrichtungsumkehrungseinheit, über die die Drehrichtung des Kreisels einstellbar ist. Die Antriebseinheit ist beispielsweise als ein Energiespeicher ausgebildet, dessen Energie über die Drehrichtungsumkehrungseinheit auf den Kreisel zum Erzeugen der Kreiselrotationsbewegung übertragbar ist.

Diese Ausführung hat den Vorteil, dass über die Drehrichtungsumkehrungseinheit die Stabilisierungsrichtung einstellbar ist, ohne dass dem Kreisel eine Kipp- oder Schwenkbewegung mit einer Änderung der Drehachse aufgeprägt werden muss. Der stabilisierende Drehimpuls des Kreisels hängt von der Drehrichtung ab, so dass in Linkskurven und in Rechtskurven durch entgegengesetzte Drehrichtungen des Kreisels entsprechend entgegengesetzte Drehimpulse erzeugbar sind, die stabilisierend auf das Zweirad wirken.

In einer vorteilhaften Ausführung weist der Kreisel eine feststehende Drehachse im Zweirad auf. Diese Ausführung lässt sich mit einfachen konstruktiven Maßnahmen realisieren, da keine aufwändigen kinematischen Vorrichtungen für ein Kippen oder Schwenken des Kreisels zur Lageveränderung der Kreiseldrehachse erforderlich sind. Die Stabilisierungsrichtung wird vorzugsweise allein über die Rotationsrichtung des Kreisels vorgegeben.

In einer alternativen Ausführung weist die Stabilisierungseinrichtung zusätzlich zu der Möglichkeit, die Drehrichtung des Kreisels umzukehren, auch eine Vorrichtung zum Kippen oder Schwenken des Kreisels auf, mit der die Kreiseldrehachse bezogen auf das zweiradeigene Koordinatensystem gekippt bzw. verschwenkt werden kann. Hiermit steht eine zusätzliche Beeinflussungsmöglichkeit zur Stabilisierung des Zweirades mithilfe der Stabilisierungseinrichtung zur Verfügung. Durch das Kippen bzw. Schwenken des Kreisels kann die Kreiseldrehachse prinzipiell eine beliebige Lage im Zweirad einnehmen.

Die Stabilisierungseinrichtung mit dem Kreisel, der Antriebseinheit und der Drehrichtungsumkehrungseinheit kann eine zusammengehörende Baueinheit bilden, die in das Zweirad eingebaut und beispielsweise mit dem Rahmen des Zweirades verbunden wird. In der Ausführung des Kreisels mit feststehender Drehachse ist der Kreisel in der Stabilisierungseinrichtung drehbar gelagert, so dass nach dem festen Einbau der Stabilisierungseinrichtung in das Zweirad der Kreisel auch gegenüber dem Zweirad eine feststehende Drehachse aufweist.

Gemäß einer vorteilhaften Ausführung ist die Drehrichtungsumkehrungseinheit als ein umschaltbares Getriebe ausgebildet. Die Antriebsbewegung der Antriebseinheit wird über das Getriebe auf den Kreisel übertragen, wobei die Drehrichtung des Kreisels von der Schaltrichtung des Getriebes abhängt und durch Umschalten des Getriebes umgekehrt werden kann. Über das Getriebe kann gegebenenfalls eine Drehzahländerung im Sinne einer Untersetzung oder Übersetzung zwischen der Antriebseinheit und dem Kreisel erreicht werden.

Gemäß einer weiteren zweckmäßigen Ausführung ist die Antriebseinheit als ein mechanischer Energiespeicher ausgeführt, beispielsweise als eine Spiralfeder. Der mechanische Energiespeicher ist insbesondere permanent vorgespannt, um im Bedarfsfall in kurzer Zeit den Kreisel drehend anzutreiben. Vorteilhafterweise befindet sich der Kreisel im Regelfall im Ruhezustand und wird über die Antriebseinheit und die Drehrichtungsumkehrungseinheit nur im Fall eines kritischen oder annähernd kritischen Fahrzustandes des Zweirades in Drehung versetzt. Insbesondere in der Ausführung als mechanischer Energiespeicher kann die Antriebseinheit einen ausreichend hohen Energiegehalt aufweisen, um den Kreisel aus dem Ruhezustand stark zu beschleunigen und eine Mindestdrehzahl aufzuprägen, die für die Stabilisierung des Zweirades erforderlich ist.

Gemäß einer weiteren zweckmäßigen Ausführung umfasst die Antriebseinheit einen Elektromotor, über den insbesondere in der Ausführung der Antriebseinheit als mechanischer Energiespeicher die Antriebsenergie auf einen Sollwert aufgefüllt werden kann. Wird zur Zweiradstabilisierung der Kreisel über die Antriebseinheit angetrieben, so dass der Energiespeicher der Antriebseinheit erschöpft ist, kann anschließend über den Elektromotor die Antriebseinheit wieder mit Speicherenergie geladen werden.

In einer alternativen Ausführung stellt der Elektromotor die Antriebseinheit dar, wobei die Antriebsbewegung des Elektromotors über die Drehrichtungsumkehrungseinheit auf den Kreisel übertragen wird.

Gemäß einer weiteren zweckmäßigen Ausführung umfasst die Stabilisierungseinrichtung eine Bremsvorrichtung, über die der Kreisel abbremsbar ist. Über die Bremsvorrichtung kann der Kreisel im Ruhezustand fixiert werden, so dass eine Kreiselrotation verhindert wird. Des Weiteren ist es möglich, den drehenden Kreisel abzubremsen. Diese Ausführung ermöglicht es, dass in sicherheitsunkritischen Fahrsituationen der Kreisel über die Bremsvorrichtung in Ruhe gehalten wird und in sicherheitskritischen oder annähernd sicherheitskritischen Fahrsituationen die Bremsvorrichtung den Kreisel freigibt, so dass der Kreisel über die Antriebseinheit und die Drehrichtungsumkehrungseinheit drehend angetrieben wird.

In einer weiteren Ausführung befindet sich im Übertragungsweg zwischen der Antriebseinheit und dem Kreisel eine Kupplung, die zwischen einem geöffneten und einem geschlossenen, bewegungsübertragenden Zustand einstellbar ist. In sicherheitsunkritischen Situationen ist die Kupplung geöffnet, so dass der Übertragungsweg zum Kreisel unterbrochen ist und die Antriebsbewegung nicht auf den Kreisel übertragen wird. In sicherheitskritischen Situationen ist die Kupplung geschlossen, um die gewünschte Übertragung der Antriebsenergie auf den Kreisel zu ermöglichen. Die Kupplung befindet sich entweder zwischen der Antriebseinheit und der Drehrichtungsumkehrungseinheit oder zwischen der Drehrichtungsumkehrungseinheit und dem Kreisel.

Gemäß einer weiteren zweckmäßigen Ausführung wird die Stabilisierungseinrichtung zur Gierstabilisierung eingesetzt, um insbesondere einen Sturz des Zweirades aufgrund eines Wegrutschens des Hinterrades zu verhindern. Zur Gierstabilisierung ist es zweckmäßig, dass die Drehachse des Kreisels mit der Hochachse des Zweirades zusammenfällt oder zumindest annähernd zusammenfällt. Diese Ausführung eignet sich insbesondere für eine Stabilisierungseinrichtung mit feststehender Drehachse des Kreisels.

In einer weiteren Ausführung, die sich ebenfalls für Stabilisierungseinrichtungen mit feststehender Drehachse des Kreisels eignet, nimmt die Drehachse des Kreisels mit der Hochachse des Zweirades einen größeren Winkel ein, der beispielsweise mindestens 45° beträgt, gegebenenfalls auch 90° betragen kann und beispielsweise parallel zur Fahrzeuglängsachse gerichtet ist. Diese Ausführung ermöglicht eine Wankstabilisierung des Zweirades mit einem um die Zweiradlängsachse wirkenden, aufrichtenden Moment.

Gemäß einer weiteren zweckmäßigen Ausführung weist die Stabilisierungseinrichtung genau einen Kreisel auf. Dies genügt grundsätzlich, um die gewünschte Zweiradstabilisierung zu erreichen. Über die Drehrichtungsumkehrungseinheit kann die Stabilisierungsrichtung beeinflusst werden.

In einer alternativen Ausführung weist die Stabilisierungseinrichtung mehr als einen Kreisel auf, beispielsweise zwei Kreisel, die vorzugsweise parallel zueinander gerichtet sind und insbesondere eine feststehende Drehachse aufweisen. Jeder Kreisel ist über eine Antriebseinheit und eine Drehrichtungsumkehrungseinheit antreibbar. Gegebenenfalls weisen die Kreisel eine gemeinsame Antriebseinheit und eine gemeinsame Drehrichtungsumkehrungseinheit auf.

Die verschiedenen einstellbaren Komponenten der Stabilisierungseinrichtung, insbesondere die Drehrichtungsumkehrungseinheit und gegebenenfalls die Bremsvorrichtung und der Elektromotor, der der Antriebseinheit zugeordnet ist, werden über Stellsignale eines Regel- bzw. Steuergerätes eingestellt. Das Regel- bzw. Steuergerät kann Bestandteil der Stabilisierungseinrichtung sein. Alternativ handelt es sich um ein Regel- bzw. Steuergerät des Zweirades, mit dem die einstellbaren Komponenten der Stabilisierungseinrichtung verbunden werden.

Die Einstellung der Komponenten der Stabilisierungseinrichtung erfolgt, gemäß weiterer zweckmäßiger Ausführung, auf der Grundlage von Sensorinformationen zu Fahrzustandsgrößen des Zweirades. Die Sensorinformationen werden insbesondere in einer Fahrzeugsensorik ermittelt, beispielsweise einer Inertialsensorik und einem oder mehreren Raddrehzahlsensoren, über die die gesuchten Fahrzustandsgrößen erfasst werden. Die Sensordaten werden in dem Regel- bzw. Steuergerät verarbeitet, in welchem die Stellsignale zur Ansteuerung der Komponenten der Stabilisierungseinrichtung erzeugt werden.

Bei dem Verfahren zum Betrieb des Zweirades werden fortlaufend Fahrzustandsgrößen ermittelt und ausgewertet, um kritische Fahrzustände zu erfassen. In diesem Fall werden Stellsignale zur Ansteuerung der einstellbaren Komponenten der Stabilisierungseinrichtung erzeugt, indem Antriebsenergie von der Antriebseinheit über die Drehrichtungsumkehrungseinheit auf den stillstehenden Kreisel geleitet wird, der hierdurch in der gewünschten Drehrichtung angetrieben wird, wodurch der das Fahrzeug stabilisierende Drehimpuls erzeugt wird.

Weitere Vorteile und zweckmäßige Ausführungen sind den weiteren Ansprüchen, der Figurenbeschreibung und den Zeichnungen zu entnehmen. Es zeigen:
- Fig. 1: in schematischer Ansicht ein motorisiertes Zweirad, das mit einer Stabilisierungseinrichtung ausgestattet ist,
- Fig. 2: die Stabilisierungseinrichtung in vergrößerter Darstellung.

In den Figuren sind gleiche Bauteile mit gleichen Bezugszeichen versehen.

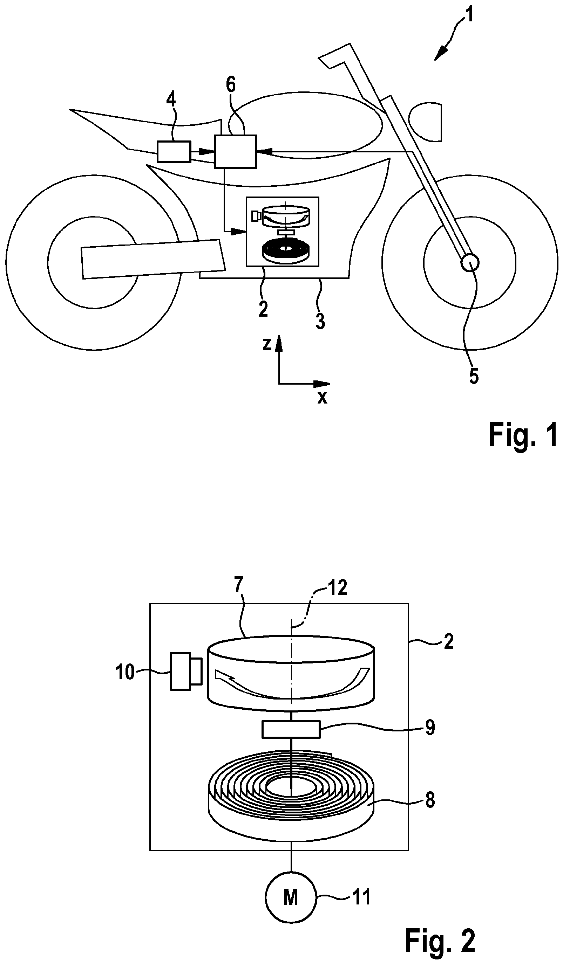

In Fig. 1 ist ein motorisiertes Zweirad 1 dargestellt, das mit einer Stabilisierungseinrichtung 2 ausgestattet ist, welches in vergrößerter Darstellung in Fig. 2 gezeigt ist. Die Stabilisierungseinrichtung 2 dient zur Stabilisierung des Zweirades 1 in fahrkritischen Zuständen, insbesondere bei Kurvenfahrt und der drohenden Gefahr eines seitlichen Wegrutschens des Hinterrades des Zweirades. Die Stabilisierungseinrichtung 2 ist am Rahmen 3 des Zweirades befestigt und bildet vorzugsweise eine vorgefertigte Baueinheit, die in das Zweirad 1 integriert wird.

Das Zweirad 1 ist in an sich bekannter Weise mit einer Sensorik ausgestattet, die eine Inertialsensorik 4 sowie zumindest einen Raddrehzahlsensor 5 am Vorderrad umfasst. Über die Sensorik 4, 5 werden Fahrzustandsgrößen erfasst, aus denen auf den Fahrzustand geschlossen werden kann. Durch Auswertung der Fahrzustandsgrößen kann auf einen kritischen oder einen sich anbahnenden kritischen Fahrzustand geschlossen werden.

Das Zweirad 1 ist mit einem Regel- bzw. Steuergerät 6 ausgestattet, dem als Eingangsgrößen die Sensorsignale der Sensorik 4, 5 zugeführt werden. In dem Regel- bzw. Steuergerät werden Stellsignale erzeugt, die der Stabilisierungseinrichtung 2 zur Ansteuerung der einstellbaren Komponenten zugeführt werden.

Wie Fig. 1 in Verbindung mit Fig. 2 zu entnehmen, umfasst die Stabilisierungseinrichtung 2 einen Kreisel 7, eine Antriebseinheit 8 und eine Drehrichtungsumkehrungseinheit 9. Des Weiteren gehören zur Stabilisierungseinrichtung 2 eine Bremsvorrichtung 10 und ein Elektromotor 11. Der Kreisel 7 weist ein hohes Trägheitsmoment auf und ist in der Stabilisierungseinrichtung um seine Drehachse 12 drehbar gelagert; eine weitere Bewegungsmöglichkeit des Kreisels 7 besteht nicht, er ist insbesondere nichtschwenk- oder kippbar gelagert. Die Drehachse 12 des Kreisels 7 verläuft im eingebauten Zustand der Stabilisierungseinrichtung 2 im Zweirad 1 parallel oder zumindest annähernd parallel zur Hochachse z des Zweirades.

Die Antriebseinheit 8 ist als ein mechanischer Energiespeicher in Form einer Spiralfeder ausgeführt. Die Spiralfeder 8 wird über eine Betätigung des Elektromotors 11 gespannt, wobei der Elektromotor 11 nur für den Spannvorgang betätigt werden muss. Die gespannte Spiralfeder 8 behält ihren Energiezustand so lange bei, bis die Federenergie zum drehenden Antreiben des Kreisels 7 umgesetzt wird.

Die Spiralfeder 8 ist über die Drehrichtungsumkehrungseinheit 9 mit dem Kreisel 7 verbunden. Die Drehrichtungsumkehrungseinheit 9 ist beispielsweise als ein umschaltbares Getriebe ausgeführt, das die Federenergie der Spiralfeder 8 in eine Rotationsbewegung des Kreisels 7 um dessen Drehachse 12 umsetzt. Über die Drehrichtungsumkehrungseinheit 9 kann die Drehrichtung des Kreisels 7 im Uhrzeigersinn oder entgegen des Uhrzeigersinns eingestellt werden.

Die Bremsvorrichtung 10 ist zwischen einer die Rotationsbewegung des Kreisels 7 bremsenden Position und einer Freigabeposition verstellbar, in welcher der Kreisel 7 ungebremst rotieren kann.

Sämtliche einstellbaren Komponenten der Stabilisierungseinrichtung 2 werden von Stellsignalen des Regel- bzw. Steuergerätes 6 im Zweirad 1 eingestellt, dies betrifft die Drehrichtungsumkehrungseinheit 9, die Bremsvorrichtung 10 sowie den Elektromotor 11.

### Das Verfahren zur Stabilisierung des Zweirades läuft folgendermaßen ab:

Über die Sensorik 4, 5 werden fortlaufend Sensorsignale ermittelt und als Eingangssignale dem Regel- bzw. Steuergerät 6 zugeführt, in welchem berechnet wird, ob ein sicherheitskritischer Fahrzustand vorliegt oder droht. Ist dies der Fall, werden Stellsignale zur Ansteuerung der einstellbaren Komponenten der Stabilisierungseinrichtung 2 erzeugt.

Solange sich das Zweirad 1 in einem sicherheitsunkritischen Zustand befindet, ist die Bremsvorrichtung 10 der Stabilisierungseinrichtung 2 in ihrer die Kreiselrotationsbewegung bremsenden Position, zugleich befindet sich die Spiralfeder 8 in ihrem gespannten Zustand. Soll die Stabilisierungseinrichtung 2 zur Zweiradstabilisierung betätigt werden, so wird die Bremsvorrichtung 10 gelöst, so dass der Kreisel 7 ungehindert rotieren kann. Zugleich wird die Drehrichtungsumkehrungseinheit 9 angesteuert, um die gewünschte Drehrichtung um die Drehachse 12 des Kreisels 7 einzustellen. Von der gespannten Spiralfeder 8 wird Federenergie über die Drehrichtungsumkehrungseinheit 9 auf den Kreisel 7 geleitet, der in der gewünschten Drehrichtung zu rotieren beginnt. Der hierdurch erzeugte Drehimpuls führt zu einer Stabilisierung des Zweirades.

Nachdem das Zweirad stabilisiert worden ist, kann die Bremsvorrichtung 10 wieder in ihre Bremsposition überführt werden, in der eine Rotation des Kreisels 7 um seine Drehachse 12 verhindert wird. Zugleich kann der Elektromotor 11 betätigt werden, um die Spiralfeder 8 wieder zu spannen.

## Patentansprüche

1. Stabilisierungseinrichtung für ein Zweirad (1), mit einem drehbar gelagerten Kreisel (7) und einer Antriebseinheit (8) zum Antreiben des Kreisels (7), **dadurch gekennzeichnet, dass** zwischen der Antriebseinheit (8) und dem Kreisel (7) eine Drehrichtungsumkehrungseinheit (9) angeordnet ist, über die die Drehrichtung des Kreisels (7) einstellbar ist.

2. Stabilisierungseinrichtung nach Anspruch 1, **dadurch gekennzeichnet, dass** die Drehrichtungsumkehrungseinheit (9) ein umschaltbares Getriebe ist.

3. Stabilisierungseinrichtung nach Anspruch 1 oder 2, **dadurch gekennzeichnet, dass** die Antriebseinheit (8) ein mechanischer Energiespeicher ist.

4. Stabilisierungseinrichtung nach Anspruch 3, **dadurch gekennzeichnet, dass** die Antriebseinheit (8) eine Spiralfeder ist.

5. Stabilisierungseinrichtung nach einem der Ansprüche 1 bis 4, **dadurch gekennzeichnet, dass** die Antriebseinheit (8) einen Elektromotor (11) umfasst.

6. Stabilisierungseinrichtung nach einem der Ansprüche 1 bis 5, **dadurch gekennzeichnet, dass** der Kreisel (7) über eine Bremsvorrichtung (10) abbremsbar ist.

7. Stabilisierungseinrichtung nach einem der Ansprüche 1 bis 6, **dadurch gekennzeichnet, dass** der Kreisel (7) eine feststehende Drehachse (12) im Zweirad (1) aufweist.

8. Stabilisierungseinrichtung nach einem der Ansprüche 1 bis 7, **dadurch gekennzeichnet, dass** die Stabilisierungseinrichtung (2) zur Gierstabilisierung einsetzbar ist und die Drehachse (12) des Kreisels (7) zumindest annähernd mit der Hochachse des Zweirads (1) zusammenfällt.

9. Stabilisierungseinrichtung nach einem der Ansprüche 1 bis 8, **dadurch gekennzeichnet, dass** die Stabilisierungseinrichtung (2) genau einen Kreisel (7) aufweist.

10. Regel- bzw. Steuergerät (6) zur Ansteuerung der einstellbaren Komponenten der Stabilisierungseinrichtung (2) nach einem der Ansprüche 1 bis 9.

11. Zweirad mit einer Stabilisierungseinrichtung (2) nach einem der Ansprüche 1 bis 9, mit einem Regel- bzw. Steuergerät (6) und mit einer Fahrzeugsensorik, wobei im Regel- bzw. Steuergerät (6) aus in der Fahrzeugsensorik ermittelten Fahrzustandsgrößen Stellsignale zur Ansteuerung der einstellbaren Komponenten der Stabilisierungseinrichtung (2) erzeugbar sind.

12. Verfahren zum Betrieb des Zweirads (1) nach Anspruch 11, bei dem im Falle eines aus Fahrzustandsgrößen ermittelten kritischen Fahrzustands die Stabilisierungseinrichtung (2) in der Weise angesteuert wird, dass ein stabilisierendes Moment erzeugt wird.

## Claims

1. Stabilization device for a two-wheeled vehicle (1), having a rotatably mounted gyroscope (7) and a drive unit (8) for driving the gyroscope (7), **characterized in that** a unit (9) for reversing the direction of rotation, via which the direction of rotation of the gyroscope (7) can be set, is arranged between the drive unit (8) and the gyroscope (7).

2. Stabilization device according to Claim 1, **characterized in that** the unit (9) for reversing the direction of rotation is a controllable gear mechanism.

3. Stabilization device according to Claim 1 or 2, **characterized in that** the drive unit (8) is a mechanical energy store.

4. Stabilization device according to Claim 3, **characterized in that** the drive unit (8) is a spiral spring.

5. Stabilization device according to one of Claims 1 to 4, **characterized in that** the drive unit (8) comprises an electric motor (11).

6. Stabilization device according to one of Claims 1 to 5, **characterized in that** the gyroscope (7) can be braked via a braking device (10).

7. Stabilization device according to one of Claims 1 to 6, **characterized in that** the gyroscope (7) has a stationary axis of rotation (12) in the two-wheeled vehicle (1).

8. Stabilization device according to one of Claims 1 to 7, **characterized in that** the stabilization device (2) can be used for yaw stabilization, and the axis of rotation (12) of the gyroscope (7) corresponds at least approximately with the vertical axis of the two-wheeled vehicle (1).

9. Stabilization device according to one of Claims 1 to 8, **characterized in that** the stabilization device (2) has exactly one gyroscope (7).

10. Open-loop or closed-loop control device (6) for driving the adjustable components of the stabilization device (2) according to one of Claims 1 to 9.

11. Two-wheeled vehicle having a stabilization device (2) according to one of Claims 1 to 9, having an open-loop or closed-loop control device (6) and having vehicle sensors, wherein actuating signals for driving the adjustable components of the stabilization device (2) can be generated in the open-loop or closed-loop control device (6) from driving state variables determined in the vehicle sensors.

12. Method for operating the two-wheeled vehicle (1) according to Claim 11, in which, in the event of a critical driving state determined from vehicle state variables, the stabilization device (2) is driven in such a way that a stabilizing torque is generated.

## Revendications

1. Dispositif de stabilisation pour un deux-roues (1), comprenant un gyroscope (7) supporté de manière à pouvoir tourner et une unité d'entraînement (8) pour l'entraînement du gyroscope (7), **caractérisé en ce qu'**entre l'unité d'entraînement (8) et le gyroscope (7) est disposée une unité d'inversion du sens de rotation (9), par le biais de laquelle le sens de rotation du gyroscope (7) peut être ajusté.

2. Dispositif de stabilisation selon la revendication 1, **caractérisé en ce que** l'unité d'inversion du sens de rotation (9) est une transmission commutable.

3. Dispositif de stabilisation selon la revendication 1 ou 2, **caractérisé en ce que** l'unité d'entraînement (8) est un accumulateur d'énergie mécanique.

4. Dispositif de stabilisation selon la revendication 3, **caractérisé en ce que** l'unité d'entraînement (8) est un ressort spiral.

5. Dispositif de stabilisation selon l'une quelconque des revendications 1 à 4, **caractérisé en ce que** l'unité d'entraînement (8) comprend un moteur électrique (11).

6. Dispositif de stabilisation selon l'une quelconque des revendications 1 à 5, **caractérisé en ce que** le gyroscope (7) peut être freiné par le biais d'un dispositif de freinage (10).

7. Dispositif de stabilisation selon l'une quelconque des revendications 1 à 6, **caractérisé en ce que** le gyroscope (7) présente un axe de rotation fixe (12) dans le deux-roues (1).

8. Dispositif de stabilisation selon l'une quelconque des revendications 1 à 7, **caractérisé en ce que** le dispositif de stabilisation (2) peut être utilisé pour la stabilisation en lacet et l'axe de rotation (12) du gyroscope (7) coïncide au moins approximativement avec l'axe vertical du deux-roues (1).

9. Dispositif de stabilisation selon l'une quelconque des revendications 1 à 8, **caractérisé en ce que** le dispositif de stabilisation (2) présente exactement un gyroscope (7).

10. Appareil de réglage ou de commande (6) pour commander les composants ajustables du dispositif de stabilisation (2) selon l'une quelconque des revendications 1 à 9.

11. Deux-roues comprenant un dispositif de stabilisation (2) selon l'une quelconque des revendications 1 à 9, comprenant un appareil de réglage ou de commande (6) et un système de capteurs de véhicule, des signaux de commande pour commander les composants ajustables du dispositif de stabilisation (2) pouvant être générés dans l'appareil de réglage ou de commande (6) à partir de grandeurs d'état de conduite déterminées dans le système de capteurs du véhicule.

12. Procédé pour faire fonctionner le deux-roues (1) selon la revendication 11, dans lequel, dans le cas d'un état de conduite critique déterminé à partir des grandeurs d'état de conduite, le dispositif de stabilisation (2) est commandé de manière à générer un couple de stabilisation.
